# EUROPÄISCHE PATENTSCHRIFT

(11) **EP 2 343 408 B1**
(45) Veröffentlichungstag und Bekanntmachung des Hinweises auf die Patenterteilung: **23.05.2012**
(21) Anmeldenummer: 10014433.6
(22) Anmeldetag: 10.11.2010
(51) Int. Cl.: D06F 39/08, F16L 19/025

(54) **Kupplungselement**
Coupling element
Elément d'embrayage

(30) Priorität: 09.01.2010 DE 102010004272
(43) Veröffentlichungstag der Anmeldung: 13.07.2011
(73) Patentinhaber: NORMA Germany GmbH, 63477 Maintal (DE)
(72) Erfinder: Nowak, Karl, 53819 Neunkirchen (DE); Schäfer, Iris, 63450 Hanau (DE)
(74) Vertreter: Knoblauch, Andreas

(56) Entgegenhaltungen:
- DE-A1- 19 836 137
- DE-A1-102008 049 959
- US-A- 5 964 447
- US-A1- 2009 218 813

## Beschreibung

Die Erfindung betrifft ein Kupplungselement zum Verbinden einer Anschlussleitung mit einem Anschlussstutzen einer Waschmaschine, der ein Außengewinde aufweist, wobei das Kupplungselement im Bereich eines ersten Endes eine Mutter mit einem Innengewinde aufweist, das mit dem Außengewinde in Eingriff bringbar ist. Ferner betrifft die Erfindung eine Waschmaschinenanschlussleitung mit einem derartigen Kupplungselement.

Derartige Kupplungselemente werden dazu verwendet, eine Anschlussleitung für Wasser mit einem Anschlussstutzen einer Waschmaschine, im Folgenden kurz Waschmaschinenanschluss bezeichnet, zu verbinden. Das andere Ende der Anschlussleitung wird dann in der Regel mit einem Wasserhahn verbunden. Größe und Geometrie von Waschmaschinenanschlüssen ist genormt, so dass unabhängig vom Fabrikat der Waschmaschine das gleiche Kupplungselement verwendet werden kann.

Herkömmliche Kupplungselemente sind dabei so aufgebaut, dass sie eine Mutter an einem Ende aufweisen, wobei die Mutter gegenüber dem Kupplungselement drehbar an einem endseitigen Flansch gelagert ist. Die Mutter wird dabei auf dem Waschmaschinenanschluss aufgeschraubt, bis eine am Flansch angeordnete axiale Dichtung stirnseitig am Waschmaschinenanschluss anliegt. Der endseitige Flansch des Kupplungselements hat also zum einen die Aufgabe, Haltekräfte von der Mutter aufzunehmen und zum anderen die Aufgabe, eine stirnseitige Dichtung zu halten.

Wird die Mutter nun mit einer großen Kraft angezogen, wird die Dichtung zwischen dem Flansch und der Stirnseite des Waschmaschinenanschlusses mit einem hohen Druck belastet, der schließlich zu einer Beschädigung der Dichtung führen kann. Damit ist eine tropfenfreie Verbindung des Kupplungselements mit dem Waschmaschinenanschluss nicht mehr gewährleistet. Häufig wird dann unter Zuhilfenahme von Werkzeugen ein weiteres Aufschrauben der Mutter auf den Waschmaschinenanschluss versucht, was schließlich zur Zerstörung der Dichtung und/oder zu einer Beschädigung des Kupplungselements führt.

Bei zunächst korrekt am Waschmaschinenanschluss montierten Kupplungselement kann es vorkommen, dass die Winkelstellung des Kupplungselements korrigiert werden soll. Da axiale Kräfte von der Mutter über den Flansch und die Dichtung auf die Stirnseite des Waschmaschinenanschlusses übertragen werden, ist bei montiertem Kupplungselement allerdings eine Verdrehung des Kupplungselements kaum noch möglich. Vielmehr kann diese dazu führen, dass die Mutter gelöst wird oder dazu, dass die Dichtung zwischen dem Flansch und der Stirnseite des Waschmaschinenanschlusses beschädigt wird. So kann ein Verdrehen des Kupplungselements beispielsweise zu einem weiteren Anziehen der Mutter führen. Eine Verdrehung des Kupplungselements kann auch unabsichtlich durch das Einwirken von Kräften auf eine Anschlussleitung erfolgen, die mit dem Kupplungselement verbunden ist.

In US 2009/0218813 A1 wird ein Kupplungselement zum Verbinden einer Anschlussleitung an einen Anschlussstutzen einer Maschine beschrieben. Am Kupplungselement ist dabei ein Außengewinde angeordnet, das mit einem Innengewinde des Anschlussstutzens zusammenwirkt. Das Außengewinde ist dabei an einem Außenring ausgebildet, der mit einem Innenring des Kupplungselements über eine Rutschkupplung verbunden ist.

US 5 964 447 A beschreibt eine Ventilanordnung mit einer Verschlusskappe, die über ein Gewinde und zusätzliche Rastarme am Ventilgehäuse befestigt ist.

DE 198 36 137 A1 zeigt eine Verschraubung mit Überwurfmutter, wobei die Überwurfmutter mit einer Rutschkupplung versehen ist, so dass die Überwurfmutter nur mit einem vorher festgelegten Drehmoment verschraubt werden kann.

Aus DE 10 2008 049 959 A1 ist ein Rohrkupplungselement bekannt, das beispielsweise an Haushalts-Waschmaschinen angeschlossen werden kann. Dieses Kupplungselement weist einen Ring auf, in dem ein Innengewinde ausgebildet ist. Dieser Ring ist dabei in mehrere bewegliche Abschnitte unterteilt, die aus einer Montagestellung in eine Arretierstellung verschwenkbar sind.

Der Erfindung liegt nun die Aufgabe zugrunde, eine Überlastung des Kupplungselements zu vermeiden.

Erfindungsgemäß wird diese Aufgabe durch ein Kupplungselement der eingangs genannten Art dadurch gelöst, dass die Mutter einen Innenring und einen Außenring aufweist, wobei zwischen Innenring und Außenring eine Rutschkupplung angeordnet ist, wobei die mutter eine axiale Anlage fläche für eine Stirnseite des Anschlussstutzens aufweist.

Diese Rutschkupplung stellt somit eine Drehmomentbegrenzung dar. Das Aufschrauben der Mutter geschieht beispielsweise manuell durch Einbringen einer Kraft bzw. eines Drehmoments auf den Außenring der Mutter, wobei diese Kraft über die Rutschkupplung auf den Innenring übertragen wird, der dementsprechend auf das Außengewinde des Anschlussstutzens aufgeschraubt wird. Bei Überschreiten eines definierten Drehmoments, bis zu dem eine zuverlässige Verbindung zwischen Kupplungselement und Anschlussstutzen hergestellt ist, rutscht die Rutschkupplung durch, so dass ein weiteres Aufschrauben der Mutter auf den Anschlussstutzen und damit eine Erhöhung der axialen Kräfte nicht möglich ist. Selbst wenn mit einem Werkzeug am Außenring der Mutter angegriffen wird, kann keine Überlastung des Kupplungselements erfolgen. Dadurch ist gewährleistet, dass die Verbindung zwischen Anschlussstutzen und Kupplungselement bzw. Mutter nicht überlastet wird.

Die Mutter weist eine axiale Anlagefläche für eine Stirnseite des Anschlussstutzens auf. Durch das Aufschrauben der Mutter werden also axiale Haltekräfte direkt von der Mutter über die axiale Anlagefläche auf die Stirnseite bzw. über die Gewindepaarung zwischen Mutter und Anschlussstutzen übertragen. Das Kupplungselement hat dabei keine Komponente im Kraftfluss. Dadurch ist eine freie Drehbewegung des Kupplungselements auch bei fest angezogener Mutter möglich. Die axiale Anlagefläche ist im Inneren der Mutter angeordnet und beispielsweise durch einen kreisförmigen axialen Vorsprung gebildet, der auf einem radialen Flansch angeordnet ist.

Dabei ist besonders bevorzugt, dass das Kupplungselement mit dem ersten Ende in den Anschlussstutzen einführbar ist. Dies hat insbesondere strömungstechnische Vorteile, da damit ein relativ sanfter Übergang vom Kupplungselement in den Anschlussstutzen erzielbar ist. Gleichzeitig können gegebenenfalls radiale Kräfte zwischen Kupplungselement und Anschlussstutzen übertragen werden, wodurch die Verbindung von Mutter und Anschlussstutzen entlastet wird. Dabei kann durch das Einführen des Endes in den Anschlussstutzen auch eine Vorpositionierung des Kupplungselements erreicht werden.

Vorteilhafterweise weist das Kupplungselement im Bereich des ersten Endes an seinem Außenumfang eine Radialdichtung auf. Statt wie bisher eine axiale Dichtung zu verwenden, die zwischen der Stirnseite des Anschlussstutzens und einem Flansch des Kupplungselements angeordnet ist, wobei der axiale Kraftfluss durch die Dichtung verläuft, wird also nun eine Radialdichtung verwendet, die am Außenumfang des in den Anschlussstutzen eingeführten Endes angeordnet ist. Durch diese Radialdichtung kann eine sichere Abdichtung unabhängig von einer Haltekraft erzielt werden. Die Radialdichtung wird von der Haltekraft nicht belastet.

Dabei ist besonders bevorzugt, dass die Radialdichtung in einer Ringnut aufgenommen ist. Die Ringnut ist dabei in dem Bereich des ersten Endes angeordnet, der in den Anschlussstutzen einführbar ist. Durch die Ringnut wird eine definierte Position der Radialdichtung gegenüber dem Kupplungselement erhalten, die auch beim Einführen des Endes in den Anschlussstutzen beibehalten wird. Durch den sicheren Halt der Dichtung in der Ringnut werden dabei auch Belastungen auf die Radialdichtung während des Einführens gering gehalten.

Vorzugsweise weist das Kupplungselement im Bereich des ersten Endes einen Ringflansch auf, wobei die Mutter an einer Seite des Ringflansches anliegt, die vom ersten Ende abgewandt ist. Der Ringflansch dient dabei zur Aufnahme axialer Haltekräfte zwischen Mutter und Kupplungselement. Die Mutter ist gegenüber dem Kupplungselement axial festgelegt, aber gleichzeitig drehbar. Dabei kann die Mutter in einer Nut, die an der vom Ende abgewandten Seite des Ringflansches angeordnet ist, mit Formschluss gehalten sein. Dadurch ist ein Verlieren der Mutter auch bei nicht montierten Kupplungselementen nahezu ausgeschlossen. Die Mutter ist dafür an einem Ende mit einem nach innen ragenden Kragen versehen. Vorzugsweise weist die Rutschkupplung Sperrklinken auf, die einstückig mit dem Innenring oder dem Außenring ausgebildet sind, wobei sie am äußeren Umfang des Innenrings oder am inneren Umfang des Außenrings angeordnet sind. Eine derartige einstückige Ausbildung der Sperrklinken führt zu einem kostengünstigen Aufbau der Rutschkupplung. Die Mutter mit dem Innenring und dem Außenring und der Rutschkupplung kann dabei einfacherweise als Spritzgussteil hergestellt werden. Durch die einstückige Ausbildung der Sperrklinken mit dem entsprechenden Ring der Mutter können stoffflüssige Gelenke verwendet werden, was den Aufbau der Rutschkupplung weiter vereinfacht.

Dabei ist besonders bevorzugt, dass die Sperrklinken zu einer Radialrichtung geneigt sind. Dadurch wird eine Vorzugsrichtung angegeben, in der der Außenring gegenüber dem Innenring mit einem relativ geringen Drehmoment verdreht werden kann, während in entgegen gesetzter Richtung eine sehr hohe Drehmomentübertragung möglich ist. In der Regel wird dabei eine Auslegung derart erfolgen, dass die Sperrklinken so geneigt sind, dass in Aufschraubrichtung ein geringeres Drehmoment übertragbar ist als in Abschraubrichtung.

Vorzugsweise greifen die Sperrklinken in Ausnehmungen ein, die im Innenring oder im Außenring ausgebildet sind. Die Ausnehmungen sind dann immer in dem Ring ausgebildet, der nicht mit den Sperrklinken versehen ist. Die Ausnehmungen führen durch Einrasten der Sperrklinken in die Ausnehmungen zu einer sicheren Kraftübertragung. Dabei bleibt allerdings durch die geneigte Ausführung der Sperrklinken gewährleistet, dass nur ein vorher definiertes Drehmoment vom Außenring auf den Innenring übertragbar ist.

Vorzugsweise übersteigt eine Anzahl an Ausnehmungen eine Anzahl an Sperrklinken. Dadurch ist eine relativ fein abgestufte Rastung der Rutschkupplung erreichbar, ohne dass unnötig viele Sperrklinken ausgebildet werden müssen. Eine hohe Anzahl an Sperrklinken würde auch zur Folge haben, dass die Rutschkupplung erst bei einem relativ hohen Drehmoment durchrutschen kann. Da relativ geringe Anzugskräfte für einen sicheren Halt des Kupplungselements am Anschlussstutzen der Waschmaschine ausreichend sind, ist dies nicht erwünscht.

Bevorzugterweise sind zwischen den Sperrklinken radiale Vorsprünge ausgebildet, wobei sich die Sperrklinken radial weiter erstrecken als die Vorsprünge. Die Sperrklinken sind aufgrund ihrer Neigung in Radialrichtung elastisch verformbar. Werden nun radiale Kräfte auf den Außenring ausgeübt, könnten diese zu einer Verformung des Außenrings-führen. Durch die radialen Vorsprünge wird nun eine mögliche Verformung des Außenrings verringert, indem die radialen Vorsprünge den Bewegungsspielraum zwischen Außenring und Innenring verringern. Des weiteren dienen die radialen Vorsprünge als Versteifung.

Bevorzugterweise weist der Innenring einen radial nach außen ragenden Kragen auf, der die Rutschkupplung zum freien Ende hin abdeckt. Durch diesen Innenring wird die Rutschkupplung und damit das innere der Mutter bei nicht montiertem Kupplungselement vor Umwelteinflüssen geschützt. Insbesondere wird die Rutschkupplung frei von Verunreinigungen gehalten.

Vorzugsweise ist an einem zweiten Ende des Kupplungselements eine Anschlussgeometrie für eine Anschlussleitung ausgebildet, wobei das zweite Ende insbesondere als Einsteckteil ausgebildet ist. Dadurch ist das Kupplungselement relativ leicht mit einer Anschlussleitung verbindbar. Gegebenenfalls kann dabei noch eine zusätzliche Schlauchschelle vorgesehen sein, die ein Lösen der Anschlussleitung vom Kupplungselement verhindert. Durch die Anschlussgeometrie ist in jedem Fall eine sichere Verbindung zwischen Kupplungselement und Anschlussleitung gewährleistet.

Die der Erfindung zugrunde liegende Aufgabe wird auch durch eine Waschmaschinenleitung mit einem Kupplungselement nach Anspruch 1 gelöst, wobei eine Anschlussleitung mit dem zweiten Ende des Kupplungselements verbunden ist.

Die Erfindung wird im Folgenden anhand bevorzugter Ausführungsbeispiele in Verbindung mit der Zeichnung näher beschrieben. Hierin zeigen:
- Fig. 1: ein Kupplungselement in dreidimensionaler An- sicht,
- Fig. 2: ein Kupplungselement in geschnittener Seiten- ansicht,
- Fig. 3: das Kupplungselement gemäß Fig. 2 in ge- schnittener Draufsicht,
- Fig. 4: ein Kupplungselement in geschnittener Seiten- ansicht,
- Fig. 5: das Kupplungselement gemäß Fig. 4 in ge- schnittener Draufsicht und
- Fig. 6: ein Kupplungselement in dreidimensionaler An- sicht.

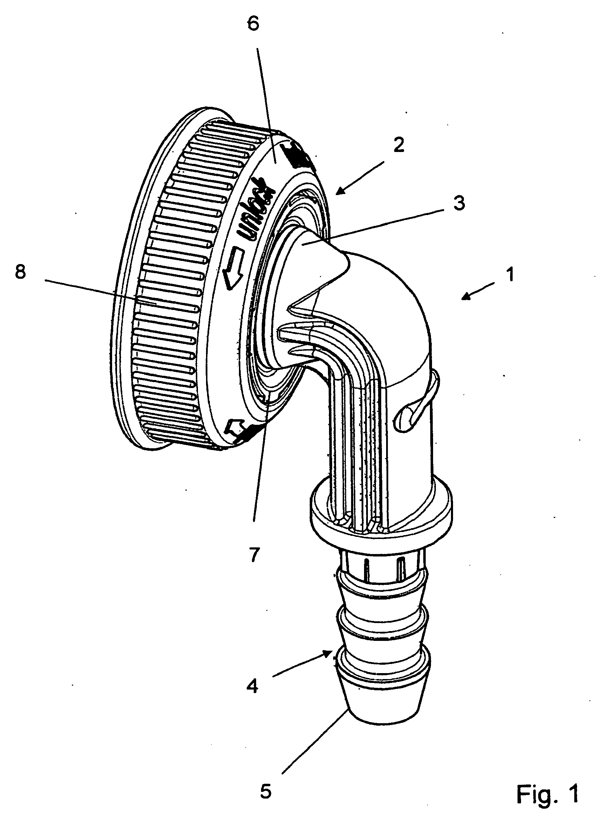

Fig. 1 zeigt ein Kupplungselement 1 mit einer Mutter 2, die im Bereich eines ersten Endes 3 des Kupplungselements 1 angeordnet ist. Das Kupplungselement 1 und die Mutter 2 bilden eine Kupplungsanordnung. Ein zweites Ende 4 ist mit einer Anschlussgeometrie 5 zum Verbinden des Kupplungselements 1 mit einer Anschlussleitung versehen. Zwischen dem ersten Ende 3 und dem zweiten Ende 4 ist das Kupplungselement um 90° abgewinkelt.

Die Mutter 2 weist einen Außenring 6 und einen Innenring 7 auf. Zwischen dem Außenring 6 und dem Innenring 7 ist eine Rutschkupplung angeordnet, die bei der Darstellung in Fig. 1 jedoch verdeckt ist.

An seinem Außenumfang weist der Außenring 6 Ausnehmungen 8 auf, die zur besseren Drehmomentübertragung auf den Außenring 6 dienen. Dabei ist der Außenring 6 mit einer Kennzeichnung in Form von Pfeilen und einer Beschriftung versehen, die eine Drehrichtung zum Aufschrauben der Mutter 2 und zum Abschrauben der Mutter 2 angibt.

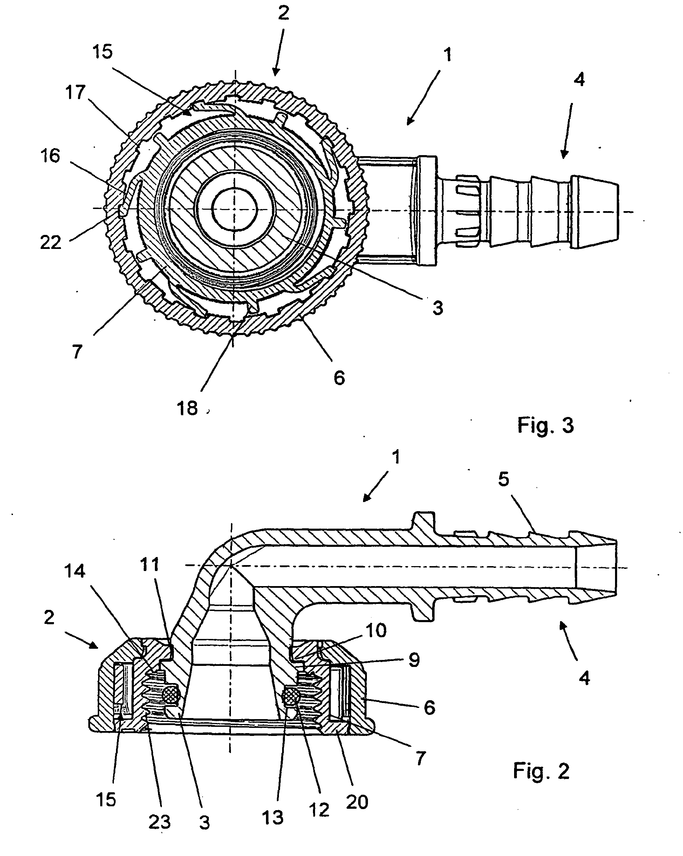

Fig. 2 zeigt eine geschnittene Darstellung des Kupplungselements 1. Im Bereich des ersten Endes 3 weist das Kupplungselement 1 einen Ringflansch 9 auf, wobei die Mutter 2 mit einem Kragen an einer Seite 10 des Ringflansches 9 anliegt, die vom Ende 3 des Kupplungselements 1 abgewandt ist. Die Mutter 2 ist dabei axial in einer Nut 11 gehalten, die zur Seite 10 benachbart verläuft. Die Mutter 2 wird dabei formschlüssig in der Nut 11 gehalten, wobei jedoch eine Drehbewegung zwischen dem Kupplungselement 1 und der Mutter 2 möglich ist. Das Ende 3 ist dabei derart ausgebildet, dass es in einen Anschlussstutzen einer Waschmaschine einführbar ist. Die Mutter 2 übergreift dann den Anschlussstutzen, so dass sie mit ihrem Innengewinde 23 auf ein Außengewinde des Anschlussstutzens aufschraubbar ist. Dabei ist an dem Ende 3 eine Radialdichtung 12 angeordnet, wobei die Radialdichtung 12 in einer Ringnut 13 aufgenommen ist. Durch die Radialdichtung 12 wird eine radiale Abdichtung zwischen dem Anschlussstutzen einer Waschmaschine und dem Kupplungselement 1 erreicht.

Die Mutter 2 weist an ihrem Innenring 7 eine axiale Anlagefläche 14 für eine Stirnseite des Abschlussstutzens auf. Bei vollständig aufgeschraubter Mutter liegt dann die Anlagefläche 14 an der Stirnseite des Anschlussstutzens auf, so dass eine direkte Kraftübertragung von der Mutter auf den Anschlussstutzen erfolgt. Das Kupplungselement 1 selbst bleibt dabei frei drehbar, da keine axialen Kräfte über das Kupplungselement 1 übertragen werden. Der Flansch 9 dient nur dazu, das Kupplungselement 1 axial innerhalb der Mutter 2 zu halten und nicht dazu, Kräfte von der Mutter 2 auf den Anschlussstutzen zu übertragen.

In Fig. 3 ist das Kupplungselement 1 gemäß Fig. 2 in geschnittener Ansicht dargestellt. Zwischen dem Außenring 6 und dem Innenring 7 der Mutter 2 ist eine Rutschkupplung 15 angeordnet, die Sperrklinken 16 und Ausnehmungen 17 aufweist. Die Sperrklinken 16 sind dabei zu einer Radialrichtung geneigt. An Enden der Sperrklinken sind Füße 22 ausgebildet, die in die Ausnehmungen 17 eingreifen können. Dadurch ist eine sichere Kraftübertragung zwischen den Ausnehmungen und den Füßen 22 bzw. Sperrklinken 16 möglich. Zwischen den Sperrklinken 16 sind radiale Vorsprünge 18 ausgebildet, die sich radial jedoch nicht so weit erstrecken wie die Sperrklinken 16.

Durch die geneigte Ausbildung der Sperrklinken 16 kann in eine Drehrichtung ein höheres Drehmoment übertragen werden als in die entgegengesetzte Drehrichtung. Gemäß der Darstellung in Fig. 3 kann bei einer Drehung des Außenrings 6 in Uhrzeigerrichtung ein sehr hohes Drehmoment auf den Innenring 7 übertragen werden, während bei einer Drehung des Außenrings 6 in Gegenrichtung bei Überschreiten eines definierten Drehmoments die Sperrklinken 16 aus den Ausnehmungen 17 herausrutschen, so dass keine weitere Kraftübertragung zwischen Außenring 6 und Innenring 7 möglich ist. Dadurch wird eine Einschraubkraft, mit der die Mutter 2 auf den Anschlussstutzen der Waschmaschine aufschraubbar ist, begrenzt. Bei der Ausbildung gemäß Fig. 3 sind die elastischen Sperrklinken 16 einstückig mit dem Innenring 7 ausgebildet und die Ausnehmungen 17 im Außenring eingeformt. Die Vorsprünge 18 sind ebenfalls einstückig mit dem Innenring 7 ausgebildet.

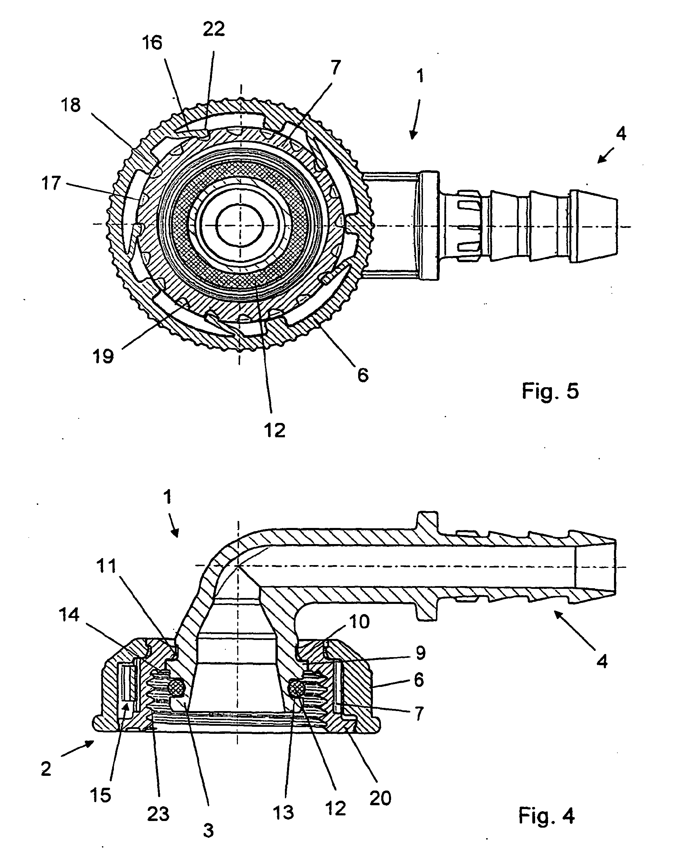

Fig. 4 zeigt ein Kupplungselement 1 mit einer Mutter 2, das im Wesentlichen der Ausführung gem. Fig. 2 entspricht. Unterschiedlich ist nur die Ausbildung der Rutschkupplung 15, was aus Fig. 5 ersichtlich wird. Bei dieser Ausführung sind die Sperrklinken 16 einstückig mit dem Außenring 6 ausgebildet, während die Ausnehmungen 17 im Innenring 7 eingeformt sind. Dabei weisen die Ausnehmungen 17 einen geneigten Boden 19 auf, der in die gleiche Richtung geneigt ist wie die Sperrklinken 16. Dadurch wird in einer Drehrichtung ein leichteres Herausrutschen der Sperrklinken 16 aus den Ausnehmungen 17 möglich.

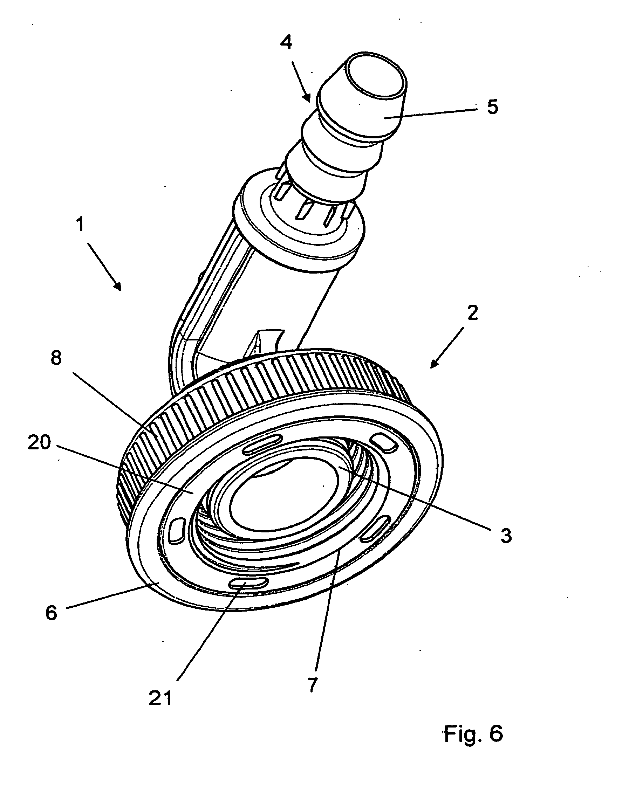

In Fig. 6 ist das Kupplungselement 1 mit der Mutter 2 in räumlicher Darstellung von der Seite gezeigt, die der Waschmaschine bei montiertem Kupplungselement zugewandt ist. Zu erkennen ist ein Kragen 20 des Innenrings 7, der die Rutschkupplung 15 nach außen abdeckt. Der Kragen 20 verhindert dabei eine Verschmutzung der Rutschkupplung 15. Im Kragen 20 sind dabei Ausformungen 21 ausgebildet, in die mit einem geeigneten Werkzeug eingegriffen werden kann, falls der Innenring 7 gegenüber dem Außenring 6 festgehalten werden soll.

Durch die erfindungsgemäße Ausgestaltung des Kupplungselements wird ein Kupplungselement erhalten, das mit einer definierten Kraft gegenüber einem Anschlussstutzen einer Waschmaschine festgelegt wird, wobei eine freie Drehung des Kupplungselements erhalten bleibt. Gleichzeitig wird dabei durch die Verwendung einer Radialdichtung eine sichere Abdichtung erreicht, wobei auch durch eine Drehbewegung des Kupplungselements nach Montage keine Beschädigung der Dichtung oder ein Lösen vom Anschlussstutzen der Waschmaschine zu befürchten ist. Gleichzeitig kann das erfindungsgemäße Kupplungselement mit der dazugehörigen Mutter kostengünstig als Spritzgussteil hergestellt werden. Die Montage des Kupplungselements erfolgt dabei in herkömmlicher Weise, also so wie bei den bisher verwendeten Kupplungselementen.

## Patentansprüche

1. Kupplungselement zum Verbinden einer Anschlussleitung mit einem Anschlussstutzen einer Waschmaschine, der ein Außengewinde aufweist, wobei das Kupplungselement im Bereich eines ersten Endes eine Mutter mit einem Innengewinde aufweist, das mit dem Außengewinde in Eingriff bringbar ist, **dadurch gekennzeichnet, dass** die Mutter (2) einen Innenring (7) und einen Außenring (6) aufweist, wobei zwischen Innenring (7) und Außenring (6) eine Rutschkupplung (15) angeordnet ist, wobei die Mutter (2) eine axiale Anlagefläche (14) für eine Stirnseite des Anschlussstutzens aufweist.

2. Kupplungselement nach Anspruch 1, **dadurch gekennzeichnet, dass** das Kupplungselement (1) mit dem ersten Ende (3) in den Anschlussstutzen einführbar ist.

3. Kupplungselement nach einem der Ansprüche 1 oder 2, **dadurch gekennzeichnet, dass** das Kupplungselement (1) im Bereich des ersten Endes (3) an seinem Außenumfang eine Radialdichtung (12) aufweist.

4. Kupplungselement nach einem der Ansprüche 1 bis 3, **dadurch gekennzeichnet, dass** es im Bereich des ersten Endes (3) einen Ringflansch (9) aufweist, wobei die Mutter (2) an einer Seite (10) des Ringflansches (9) anliegt, die vom ersten Ende (3) abgewandt ist.

5. Kupplungselement nach einem der Ansprüche 1 bis 4, **dadurch gekennzeichnet, dass** die Rutschkupplung (15) Sperrklinken (16) aufweist, die einstückig mit dem Innenring (7) oder dem Außenring (6) ausgebildet sind, wobei sie am äußeren Umfang des Innenrings (7) oder am inneren Umfang des Außenrings (6) angeordnet sind.

6. Kupplungselement nach Anspruch 5, **dadurch gekennzeichnet, dass** die Sperrklinken (16) zu einer Radialrichtung geneigt sind.

7. Kupplungselement nach Anspruch 5 oder 6, **dadurch gekennzeichnet, dass** die Sperrklinken (16) in Ausnehmungen (17) eingreifen, die im Innenring (7) und im Außenring (6) ausgebildet sind.

8. Kupplungselement nach Anspruch 7, **dadurch gekennzeichnet, dass** eine Anzahl an Ausnehmungen (17) eine Anzahl an Sperrklinken (16) übersteigt.

9. Kupplungselement nach einem der Ansprüche 5 bis 8, **dadurch gekennzeichnet, dass** zwischen den Sperrklinken (16) radiale Vorsprünge (18) ausgebildet sind, wobei sich die Sperrklinken (16) radial weiter erstrecken als die Vorsprünge (18).

10. Kupplungselement nach einem der Ansprüche 1 bis 9, **dadurch gekennzeichnet, dass** der Innenring (7) einen radial nach außen ragenden Kragen (20) aufweist, der die Rutschkupplung (15) zum freien Ende hin abdeckt.

11. Kupplungselement nach einem der Ansprüche 1 bis 10, **dadurch gekennzeichnet, dass** an einem zweiten Ende (4) des Kupplungselements (1) eine Anschlussgeometrie (5) für eine Anschlussleitung ausgebildet ist, wobei das zweite Ende (4) insbesondere als Einsteckteil ausgebildet ist.

12. Waschmaschinenanschlussleitung mit einem Kupplungselement nach einem der Ansprüche 1 bis 11, wobei eine Anschlussleitung mit dem zweiten Ende (4) des Kupplungselements (1) verbunden ist, insbesondere auf das zweite Ende (4) aufgeschoben ist.

## Claims

1. Coupling element for connecting a connection line to a pipe connection of a washing machine having an external thread, the coupling element comprising in a region of a first end a nut with an internal thread engageable with the external thread, **characterized in that** the nut (2) includes an inner ring (7) and an outer ring (6), a slip clutch (15) being arranged between the inner ring (7) and the outer ring (6), wherein the nut (2) includes an axial mounting surface (14) for a front face of the pipe connection.

2. Coupling element in accordance with claim 1, **characterized in that** the coupling element (1) with the first end (3) is insertable into the pipe connection.

3. Coupling element in accordance with claim 1 or 2, **characterized in that** the coupling element (1) comprises a radial seal (12) at a circumference in the region of the first end (3).

4. Coupling element in accordance with any of claims 1 to 3, **characterized in that** it comprises an annular flange (9) in the region of the first end (3), wherein the nut (2) bears against a side (10) of the annular flange (9) facing away from the first end (3).

5. Coupling element in accordance with any of claims 1 to 4, **characterized in that** the slip clutch (15) has locking pawls (16) that are integral with one of the inner ring (7) or the outer ring (6), wherein they are arranged on one of an outer circumference of the inner ring (7) or on an inner circumference of the outer ring (6).

6. Coupling element in accordance with claim 5, **characterized in that** the locking pawls (16) are tilted to a radial direction.

7. Coupling element in accordance with claim 5 or 6, **characterized in that** the locking pawls (16) engage in recesses (17) formed in one of the inner ring (7) and outer ring (6).

8. Coupling element in accordance with claim 7, **characterized in that** a number of recesses (17) is greater than a number of locking pawls (16).

9. Coupling element in accordance with any of claims 5 to 8, **characterized in that** radial projections (18) are formed between the locking pawls (16), wherein the locking pawls (16) extend radially further than the projections (18).

10. Coupling element in accordance with any of claims 1 to 9, **characterized in that** the inner ring (7) has a collar (20) projecting radially outwards that covers the slip clutch (15) towards a free end.

11. Coupling element in accordance with any of claims 1 to 10, **characterized in that** a connection geometry for a connection line is formed on a second end (4), wherein in particular the second end (4) is formed as a plug-in part.

12. Washing machine connection line having a coupling element in accordance with any of claims 1 to 11, wherein a connection line is connected with the second end (4) in particular pushed on the second end (4).

## Revendications

1. Élément d'accouplement pour relier une conduite de raccordement avec un raccord d'une machine à laver, qui comporte un filetage, ledit élément d'accouplement comprenant au niveau d'une première extrémité un écrou avec un taraudage qui peut être amené en engagement avec le filetage, **caractérisé en ce que** l'écrou (2) comprend une bague intérieure (7) et une bague extérieure (6), un accouplement à friction (15) étant agencé entre la bague intérieure (7) et la bague extérieure (6), et l'écrou (2) comportant une surface d'appui axial (14) pour une face frontale du raccord.

2. Élément d'accouplement selon la revendication 1, **caractérisé en ce que** l'élément d'accouplement (1) est susceptible d'être engagé avec la première extrémité (3) dans le raccord.

3. Élément d'accouplement selon l'une des revendications 1 ou 2, **caractérisé en ce que** l'élément d'accouplement (1) comprend un joint radial (12) au niveau de la première extrémité (3) sur sa périphérie extérieure.

4. Élément d'accouplement selon l'une des revendications 1 à 3, **caractérisé en ce qu'**il comprend une bride annulaire (9) au niveau de la première extrémité (3), l'écrou (2) s'appuyant sur un côté (10) de la bride annulaire (9) qui est opposée à la première extrémité (3).

5. Élément d'accouplement selon l'une des revendications 1 à 4, **caractérisé en ce que** l'accouplement à friction (15) comprend des loquets de blocage (16) qui sont réalisés d'un seul tenant avec la bague intérieure (7) ou la bague extérieure (6), ceux-ci étant agencés à la périphérie extérieure de la bague intérieure (7) ou à la périphérie intérieure de la bague extérieure (6).

6. Élément d'accouplement selon la revendication 5, **caractérisé en ce que** les loquets de blocage (16) sont inclinés par rapport à une direction radiale.

7. Élément d'accouplement selon la revendication 5 ou 6, **caractérisé en ce que** les loquets de blocage (16) s'engagent dans des évidements (17) qui sont ménagés dans la bague intérieure (7) ou dans la bague extérieure (6).

8. Élément d'accouplement selon la revendication 7, **caractérisé en ce que** le nombre d'évidements (17) dépasse le nombre de loquets de blocage (16).

9. Élément d'accouplement selon l'une des revendications 5 à 8, **caractérisé en ce que** des saillies radiales (18) sont réalisées entre les loquets de blocage (16), lesdits loquets de blocage (16) s'étendant plus loin dans la direction radiale que les saillies (18).

10. Élément d'accouplement selon l'une des revendications 1 à 7, **caractérisé en ce que** la bague intérieure (7) comporte une collerette (20) s'étendant vers l'extérieur dans la direction radiale, qui recouvre l'accouplement à friction (15) à son extrémité libre.

11. Élément d'accouplement selon l'une des revendications 1 à 10, **caractérisé en ce qu'**une géométrie de raccordement (5) pour une conduite de raccordement est réalisée à une seconde extrémité (4) de l'élément d'accouplement (1), la seconde extrémité (4) étant réalisée en particulier comme une pièce à enficher.

12. Conduite de raccordement de machine à laver comprenant un élément d'accouplement selon l'une des revendications 1 à 11, dans laquelle une conduite de raccordement est reliée à la seconde extrémité (4) de l'élément d'accouplement (4), en particulier enfilée sur la seconde extrémité (4).
